# EUROPÄISCHE PATENTSCHRIFT

(11) **EP 3 665 456 B1**
(45) Veröffentlichungstag und Bekanntmachung des Hinweises auf die Patenterteilung: **04.09.2024**
(21) Anmeldenummer: 18740801.8
(22) Anmeldetag: 12.07.2018
(51) Int. Cl.: G01K 1/143, G01K 13/02

(54) **WANDLERVORRICHTUNG MIT EINER SENSORBAUGRUPPE SOWIE VERFAHREN ZU IHRER HERSTELLUNG**
TRANSDUCER DEVICE WITH A SENSOR ASSEMBLY AND METHOD FOR ITS MANUFACTURING
DISPOSITIF TRANSDUCTEUR AVEC UN ENSEMBLE DE CAPTEUR ET PROCÉDÉ POUR SA FABRICATION

(30) Priorität: 09.08.2017 DE 102017118109
(43) Veröffentlichungstag der Anmeldung: 17.06.2020
(73) Patentinhaber: Endress+Hauser Flowtec AG, 4153 Reinach (CH)
(72) Erfinder: RAMSEYER, Severin, 4142 Münchenstein (CH); SCHWENTER, Benjamin, 4226 Breitenbach (CH)
(74) Vertreter: Hahn, Christian
(86) Internationale Anmeldenummer: PCT/EP2018/068898
(87) Internationale Veröffentlichungsnummer: WO 2019/029942

(56) Entgegenhaltungen:
- EP-A1- 0 171 904
- US-A1- 2004 028 118

## Beschreibung

Die Erfindung betrifft eine Wandlervorrichtung mit eine Sensorbaugruppe und einem damit verbundenen Rohr. Ferner betrifft die Erfindung auch ein Herstellungsverfahren für eine solche Wandlervorrichtung. Wandlervorrichtungen der vorgenannten Art bzw. damit gebildete Meßsysteme sind u.a. in der US 2004/0028118 A1, der EP 0 171 904 A1, EP-A 919 793, der US-A 2004/0187599, der US-A 2011/0113896, der US-A 2014/0069210, der US-A 2016/0138952, der US-A 2017/0074701, der US-A 47 68 384, der US-A 53 81 697, der US-B 75 49 319, der WO-A 01/02816, der WO-A 2009/134268, der WO-A 2012/033504, der WO-A 2012/067608 oder der WO-A 2012/115639 gezeigt. Demnach können solche Wandlervorrichtungen jeweils wenigstens ein ein von einer - typischerweise metallischen - Wandung umhülltes Lumen aufweisendes, insb. dem Führen eines strömenden Fluids dienliches, Rohr sowie einen außen auf nämlichem Rohr angebrachten, gleichsam thermisch leitend damit verbundenen Temperatursensor umfassen. Das Rohr der vorbezeichneten Wandlervorrichtungen kann zudem im besonderen dafür eingerichtet sein, in seinem Lumen ein jeweils zumindest zeitweise strömendes Fluid, beispielsweise nämlich ein Gas, eine Flüssigkeit oder eine fließfähige Dispersion, zu führen und währenddessen vibrieren gelassen zu werden. Der Temperatursensor wiederum ist dafür eingerichtet, eine Temperatur der Wandung des Rohrs zu erfassen und in ein entsprechendes, nämlich vorbezeichnete Temperatur repräsentierendes elektrisches Temperaturmeßsignal zu wandeln. Die Wandlervorrichtung, insb. nämlich deren Temperatursensor, kann ferner unter Bildung eines dem Messen wenigstens einer Meßgröße, beispielsweise nämlich einer Temperatur, einer Massendurchflußrate, einer Dichte und/oder einer Viskosität, des im wenigstens einen Rohr der jeweiligen Wandlervorrichtung geführten Fluids dienlichen Meßsystems an eine, beispielsweise mittels wenigstens eines Mikroprozessors gebildete, Meß- und Betriebs-Elektronik angeschlossen sein.

Der vorbezeichnete Temperatursensor ist typischerweise mittels wenigstens eines Temperaturfühlers sowie eines nämlichen Temperaturfühler mechanisch, gleichwohl thermisch leitend mit der Wandung des Rohrs verbindenden Koppelkörper gebildet. Solche Temperaturfühler können beispielsweise mittels eines temperaturempfindlichen Meßwiderstands, beispielsweise nämlich einem Platin-Meßwiderstand, wie etwa einem Pt100, einem Pt500 oder einem Pt1000, einem Thermistor oder einem Thermoelement gebildet sein. Der prinzipielle Aufbau und Verwendung solcher Platin-Meßwiderstände sind dem Fachmann bekannt und u.a. in der EP-A 01801548, der WO-A 2009/016013 oder der WO-A 2017/036760 A1 gezeigt. Der Koppelkörper wiederum kann beispielsweise ein Formteil aus Metall oder Kunststoff sein und/oder unmittelbar bei der Anbringung des Temperaturfühlers am Rohr mittels Wärmeleitkleber oder mittels Lot gebildet werden.

Wie u.a. in der eingangs erwähnten US-A 2016/0138952 erörtert kann bei Wandlervorrichtungen der vorbeschriebenen Art bzw. damit gebildeten Meßsystemen, nicht zuletzt auch bei einer Wandlervorrichtung mit vibrierendem Rohr bzw. einem damit gebildeten vibronischen Meßsystem, ein erhöhtes Risiko u.a. darin bestehen, daß die Verbindung zwischen der Wandung des jeweiligen Rohrs und dem zugehörigen Temperatursensor - beispielsweise infolge von Materialveränderungen und/oder überhöhten mechanischen Spannungen und/oder einer zu hohen Betriebstemperatur - nicht langzeitstabil ist bzw. beschädigt wird, derart, daß sich die Abhängigkeit des damit generierten Temperaturmeßsignals von der zu erfassenden Temperatur der Wandung über die Betriebszeit grundsätzlich ändert und/oder daß sich der jeweilige Temperatursensor von der Wandung wieder ablöst; dies im besonderen bei Anwendungen bei denen die Temperatur der Wandung sehr hoch, sehr niedrig und/oder sehr schnell, ggf. auch sprunghaft ändernd ist.

Bei der in der US-A 2016/0138952 gezeigten Wandlervorrichtung weist der Temperatursensor daher eine dessen sichere und zuverlässige Fixierung auf der Wandung ermöglichende zusätzliche Halteklammer auf, die den Temperaturfühler zusammen mit dem - hier als Fixierelement bezeichneten - Koppelkörper zumindest teilweise umgibt und die stoffschlüssig, beispielsweise durch Löten, Schweißen oder Kleben, mit der Wandung verbunden ist. Ein Nachteil dieser Lösung ist u.a. allerdings darin zu sehen, daß die endgültige Fertigstellung des ohnehin relativ aufwendig zu fertigenden Temperatursensors in-situ, nämlich erst in endgültiger Einbaulage auf dem Rohr vollzogen wird, indem nämlich die Halteklammer zunächst paßgenau auf den bereits auf das Rohr zusammen mit dem Koppelkörper applizierten Temperaturfühler aufgesetzt und hernach unter Beibehaltung von Position und Lage sämtlicher Komponenten des Temperatursensors mit der Wandung des Rohrs verbunden wird. Damit einhergehend erhöhen sich der Montageaufwand des Temperatursensors bzw. die damit gebildete Wandlervorrichtung wie auch die an das die Montage durchführende Personal zu stellenden Anforderungen beträchtlich; dies nicht zuletzt deswegen, weil nicht nur der Temperaturfühler zusammen mit dem Koppelkörper - typischerweise manuell - sehr präzise auf der Wandung des jeweiligen Rohrs positioniert bzw. geformt und fixiert werden müssen, sondern weil hernach zudem auch die Halteklammer - abgestimmt auf die auf dem Rohr zunächst durch Temperaturfühler und Koppelkörper gebildete Baugruppe - entsprechend präzise vorgeformt und - ebenfalls manuell - auf dem Rohr positioniert und daran fixiert werden muß. Darüberhinaus kann der so hergestellte Temperatursensor, nicht zuletzt aufgrund des relativ großen Anteils an manueller Fertigung, eine entsprechende aufwendige nachträgliche Qualitätskontrolle erfordern.

Ausgehend vom vorbezeichneten Stand der Technik besteht eine Aufgabe der Erfindung daher darin, Temperatursensoren der vorbeschriebenen Art dahingehend zu verbessern, daß zum einen deren Endmontage am Rohr vereinfacht und zum anderen für die so hergestellten Temperatursensoren bzw. die damit gebildete Wandlervorrichtungen eine hohe Langzeitstabilität erreicht bzw. gewährleistet werden kann. Im besonderen soll zudem eine Verwendung des Temperatursensors bzw. der damit gebildeten Wandlervorrichtung auch für Betriebstemperaturen von über 350°C ermöglicht sein.

Zur Lösung der Aufgabe besteht die Erfindung in einer mittels einer Sensorbaugruppe gebildeten Wandlervorrichtung gemäß dem unabhängigen Anspruch 1.

Darüberhinaus wird ein mittels einer solchen Wandlervorrichtung gebildetes Meßsystem zum Messen wenigstens einer Meßgröße, beispielsweise einer Temperatur, einer Dichte und/oder einer Viskosität, eines strömenden Fluids, beispielsweise eines Gases, einer Flüssigkeit oder einer fließfähigen Dispersion offenbart, welches Meßsystem zudem eine mit dem Temperaturfühler elektrisch verbundene, beispielsweise mittels eines Mikroprozessors gebildete, Meß- und Betriebs-Elektronik umfaßt.

Zudem besteht die Erfindung auch in einem Verfahren zum Herstellen der vorbezeichneten Wandlervorrichtung gemäß dem Anspruch 13.

Ein Grundgedanke der Erfindung besteht darin, einen möglichst einfach und gut reproduzierbar zu montierenden, gleichwohl langzeitstabilen Temperatursensor bereitzustellen, indem zunächst eine vorkonfektionierte, nämlich sowohl den Temperaturfühler und den Koppelkörper als auch ein Temperaturfühler und Koppelkörper tragendes zusätzliches Trägerelement enthaltende Sensorbaugruppe gebildet wird, die hernach vergleichsweise einfach, gleichwohl gut reproduzierbar und extrem vibrationsfest mit der Wandung des Rohrs stoffschlüssig verbunden werden kann, wobei ein den Temperaturfühler und den Koppelkörper tragendes Mittelsegment des Trägerelements relativ starr im Vergleich zu daran jeweils anschließenden Endsegmenten des Trägerelements ausgebildet ist, um im Rohr und/oder der Sensorbaugruppe allfällig auftretende erhöhten mechanische Spannungen von dem Temperaturfühler und dem Koppelkörper dauerhaft fernzuhalten.

Die vorbezeichnete stoffschlüssige Verbindung zwischen Sensorbaugruppe und Rohr kann - zumindest für den Fall, daß sowohl die Wandung des Rohrs als auch das Trägerelement aus einem Stahl, beispielsweise nämlich einem Edelstahl bestehen - vorteilhaft beispielsweise ausschließlich durch Widerstandsschweißen, insb. Punktschweißen, der Endsegmente an die Wandung erfolgen. Zudem kann nämliche Verbindung vorteilhaft überwiegend bzw. ausschließlich über die Endsegmente des Trägerelements hergestellt sein.

Ein weiterer Vorteil der Erfindung ist u.a. auch darin zu sehen, daß die jeweiligen Sensorbaugruppen außerhalb der Wandlervorrichtung maschinell, ggf. auch automatisiert, mithin sehr gut reproduzierbar und in größeren Stückzahlen vorgefertigt werden können. Im Ergebnis dessen können die erfindungsgemäßen Sensorbaugruppen bzw. die damit gebildeten Wandlervorrichtungen im Vergleich zu herkömmlichen Wandlervorrichtungen sehr geringe Toleranzen, nämlich sehr geringe Abweichungen von einem entsprechenden Nennmaß aufweisen. Darüberhinaus ist die erfindungsgemäße Sensorbaugruppe ohne weiteres an den jeweiligen Außendurchmesser des Rohrs anpaßpar bzw. kann eine in einer bestimmten Baugröße hergestellte erfindungsgemäße Sensorbaugruppe für jedes Rohr verwendet werden, das einen innerhalb eines vorgegeben, gleichwohl sich über mehrere Zentimeter erstreckenden Größenbereichs liegenden Außendurchmesser aufweist.

Ein weiterer Vorteil der Erfindung besteht zudem auch darin, daß aufgrund der vorbezeichneten Vorfertigung des Temperatursensors bzw. dessen erheblich vereinfachter Endmontage am jeweiligen Rohr ein Temperaturansprechverhalten der erfindungsgemäßen Wandlervorrichtung auch für eine großen Anzahl an solchen Wandlervorrichtungen sehr gut reproduzierbar ist bzw. in Serienfertigung bzw. in seriennaher Fertigung hergestellte Wandlervorrichtungen diesbezüglich eine im Vergleich zu konventionellen Wandlervorrichtungen der eingangs genannten Art erheblich geringere Exemplarstreuung aufweisen können. Wenngleich dieser Vorteil konstruktionsbedingt zu Lasten eines zwischen Rohr und Temperatursensor etablierter Wärmedurchlasswiderstandes bzw. Wärmedurchlasskoeffizienten gehen kann, so kann dennoch eine erfindungsgemäße Wandlervorrichtung im Ergebnis eine im Vergleich zu konventionellen Wandlervorrichtungen deutlich verbesserte Langzeitstabilität für den jeweiligen Temperatursensor aufweisen bzw. kann ein damit gebildetes Meßsystem bei der Temperaturmessung eine im Vergleich zu konventionellen Meßsystemen der in Rede stehenden Art deutlich verringerte Drift, mithin erhöhte Meßgenauigkeit aufweisen.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1a: in einer perspektivischen Seitenansicht ein Ausführungsbeispiel für eine erfindungsgemäße Sensorbaugruppe;
- Fig. 1b: eine erfindungsgemäße Sensorbaugruppe in einer geschnittenen Seitenansicht;
- Fig. 2: eine erfindungsgemäße Sensorbaugruppe in einer zweiten geschnittenen Seitenansicht;
- Fig. 3a: in einer perspektivischen Seitenansicht ein Ausführungsbeispiel für eine erfindungsgemäße Wandlervorrichtung;
- Fig. 3b: eine erfindungsgemäße Wandlervorrichtung in einer geschnittenen Seitenansicht;
- Fig. 4a: in einer geschnittenen Seitenansicht ein weiteres Ausführungsbeispiel für eine erfindungsgemäße Sensorbaugruppe;
- Fig. 4b: in einer geschnittenen Seitenansicht ein anderes Ausführungsbeispiel für eine erfindungsgemäße Sensorbaugruppe;
- Fig. 5: in einer geschnittenen Seitenansicht ein weiteres Ausführungsbeispiel für eine erfindungsgemäße Sensorbaugruppe bzw. eine damit gebildete Wandlervorrichtung; und
- Fig. 6: in einer geschnittenen Seitenansicht ein anderes Ausführungsbeispiel für eine erfindungsgemäße Wandlervorrichtung.

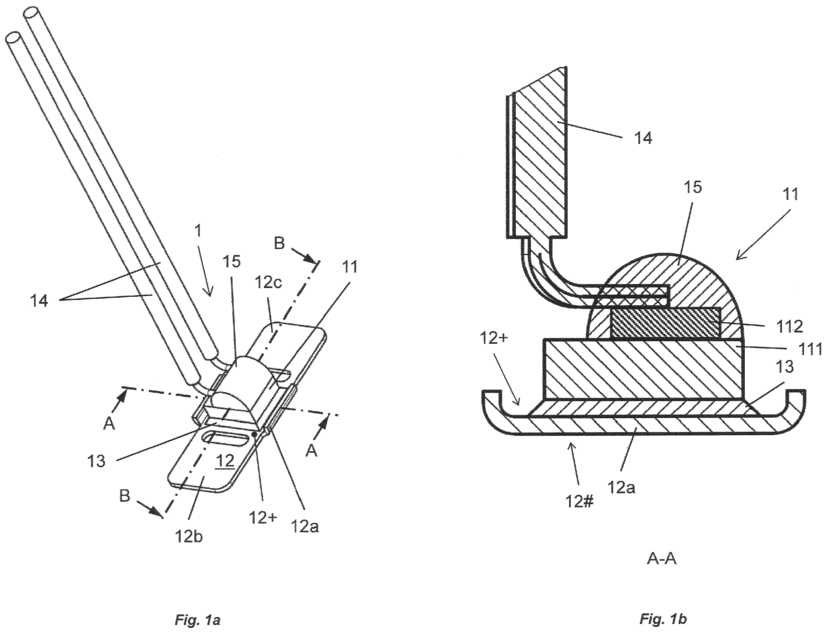

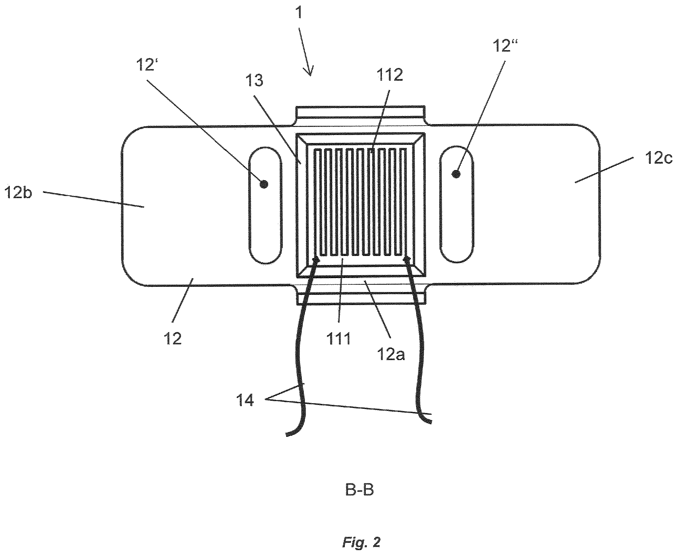

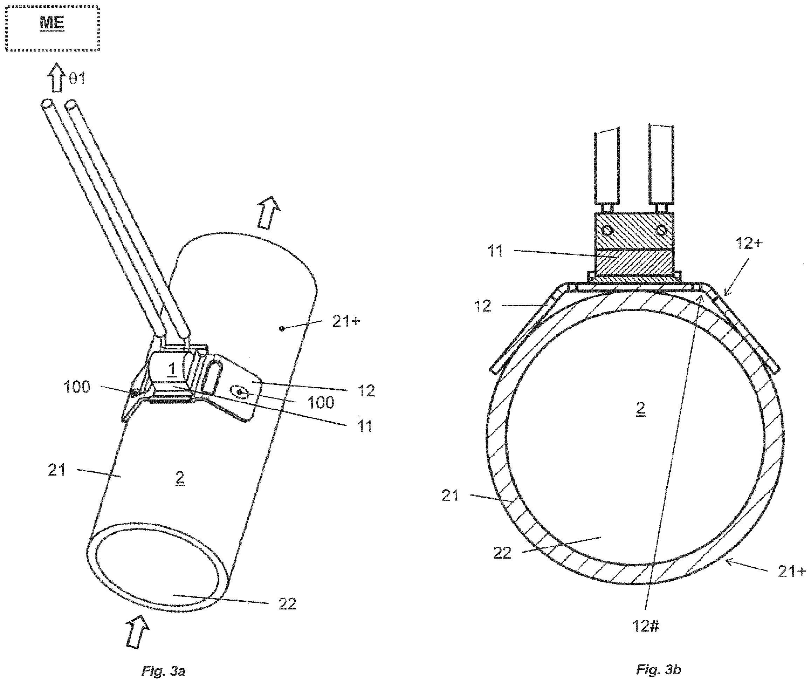

In Fig. 1a, 1b und 2 ist in verschiedenen Seitenansichten ein Ausführungsbeispiel für eine erfindungsgemäße - hier in einer Ursprungs- oder Ausgangsform gezeigte - Sensorbaugruppe 1 dargestellt. Nämliche Sensorbaugruppe 1 ist, wie auch in Fig. 3a bzw. 3b dargestellt, im besonderen dafür vorgesehen und eingerichtet, unter Bildung einer dem Messen wenigstens einer Meßgröße, beispielsweise nämliche einer Temperatur, einer Dichte und/oder einer Viskosität, eines strömenden Fluids dienlichen Wandlervorrichtung auf eine Wandung eines, beispielsweise mittels Flanschverbindung in den Verlauf einer das Fluid zu- bzw. wiederabführenden Rohrleitung einsetzbares, Rohrs 2 aufgesetzt und damit verbunden zu werden. Fluid kann beispielsweise ein Gas, eine Flüssigkeit oder eine fließfähigen Dispersion sein. Die erfindungsgemäße Sensorbaugruppe 1 bzw. die damit gebildete Wandlervorrichtung können zudem zusammen mit einer, beispielsweise auch mittels eines Mikroprozessors gebildeten, Meß- und Betriebs-Elektronik ME Bestandteil eines dem Messen der vorbezeichneten wenigstens einen Meßgröße dienlichen - beispielsweise auch vibronischen - Meßsystems sein.

Die Sensorbaugruppe 1 umfaßt einen Temperaturfühler 11, ein Trägerelement 12 zum Haltern nämlichen Temperaturfühlers 11 sowie einen den Temperaturfühler 11 thermisch leitend mit dem Trägerelement 12 koppelnden Kopplungskörper 13. Der Temperaturfühler 11 und der Koppelkörper 13 sind vorteilhaft stoffschlüssig miteinander verbunden. Der Temperaturfühler 11 ist nach einer weiteren Ausgestaltung dafür eingerichtet, eine Temperatur an einer damit gebildeten Temperaturmeßstelle zu erfassen und in ein Temperaturmeßsignal 81, nämlich ein die Meßstellentemperatur ϑ1 repräsentierendes elektrisches Meßsignal, beispielsweis nämlich mit einer von nämlicher ersten Meßstellentemperatur abhängigen elektrische Signalspannung und/oder einem von nämlicher ersten Meßstellentemperatur abhängigen elektrischen Signalstrom, zu wandeln. Der Temperaturfühler 11 der erfindungsgemäßen Sensorbaugruppe kann beispielsweise mittels eines temperaturempfindlichen Meßwiderstands, beispielsweise nämlich einem Platin-Meßwiderstand, wie etwa einem Pt100, einem Pt500 oder einem Pt1000 gebildet sein. Alternativ oder in Ergänzung kann der Temperaturfühler auch mittels eines Thermistors und/oder eines Thermoelements gebildet sein.

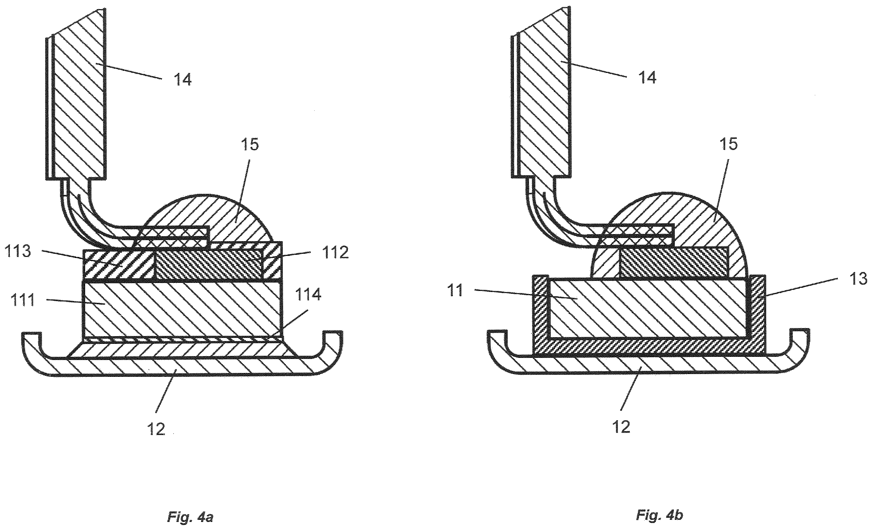

Vorteilhaft kann es sich bei dem Temperaturfühler um einen in Dünnschichttechnik hergestellten Temperaturfühler handeln, beispielsweise nämliche einen in Dünnschichttechnik hergestellten Platin-Meßwiderstand, wie er z.B. von der Fa. Innovative Sensor Technology IST AG, Ebnat-Kappel, CH, u.a. unter der Bezeichnung P0K1.520.4W.B.010, angeboten wird. Demnach weist der Temperaturfühler 11 nach einer weiteren Ausgestaltung der Erfindung einen Träger 111, beispielsweise aus einem Glas und/oder einer Keramik, sowie wenigstens eine auf nämlichem Träger 111 angeordnete, beispielsweise nämlich in Dünnschichttechnik applizierte und/oder-wie auch in Fig. 2 angedeutet - zumindest abschnittsweise mäanderförmige, Leiterbahn 112, z.B. aus Platin, auf. Zur Vermeidung allfälliger Beschädigungen der Leiterbahn 112 kann der Temperaturfühler 11 ferner, wie auch in Fig. 1a und 1b angedeutet bzw. aus deren Zusammenschau ersichtlich, eine zumindest die Leiterbahn 12 zumindest teilweise bedeckende Schutzschicht 113 aufweisen. Nämliche Schutzschicht 113 kann beispielsweise zumindest anteilig aus einem, insb. bleifreien und/oder der EU-Richtlinie 2011/65/EU (ROHS 2) konformen Glas bestehen. Alternativ oder in Ergänzung kann auf einer die wenigstens eine Leiterbahn 112 nicht tragenden, beispielsweise nämlich - wie auch in Fig. 4a angedeutete - der Leiterbahn gegenüberliegenden, Seite des Trägers 111 eine Metallisierungsschicht 114 vorgesehen sein. Nämliche - beispielsweise in Dünnschichttechnik applizierte - Metallisierungsschicht 114 kann nicht zuletzt für den vorbezeichneten Fall, daß der Träger 111 aus Keramik oder Glas und das Trägerelement aus einem Metall besteht, dazu dienen, den Temperaturfühler 11 mit einem Metallkörper verlöten zu können.

Das Trägerelement 12 der erfindungsgemäßen Sensorbaugruppe 1 weist ein Mittelsegment 12a, ein an ein erstes Ende des Mittelsegments 12a anschließenden plattenförmig ausgebildetes erstes Endsegment 12b sowie ein an ein, vom ersten Ende entferntes, plattenförmig ausgebildetes zweites Ende des Mittelsegments 12a anschließendes zweites Endsegment 12c auf. Das vorbezeichnete Teilsegmente 12a des Trägerelements 12 kann - wie auch in Fig. 1a bzw. aus einer Zusammenschau der Fig. 1a, 1b und 2 ohne weiteres ersichtlich - plattenförmig ausgebildet sein. Das Trägerelement 12 kann beispielsweise aus einem Metall, insb. einem Stahl, bestehen und/oder monolithisch ausgestaltet, beispielsweise nämlich als ein Stanz-Biege-Teil hergestellt sein. Nach einer Ausgestaltung der Erfindung besteht das Trägerelement 12 zumindest anteilig, insb. nämlich überwiegend oder vollständig, aus einem Edelstahl, insb. nämlich einem austenitischen rostfreien Stahl.

Der Koppelkörper 13 wiederum kann beispielsweise ein Block oder ein Formteil aus Metall und/oder einem möglichst gut wärmeleitenden Kunststoff sein. Vorteilhaft kann der Koppelkörper 13 zudem auch in-situ, nämlich erst im Zuge eines Bildens der Sensorbaugruppe geschaffen werden, beispielsweise indem der Temperaturfühler 11 und das Trägerelement 12 unter Bildung nämlichen Koppelkörpers 13 miteinander verlötet bzw. verklebt werden. Desweiteren kann der Koppelkörper 13 auch so ausgebildet und angeordnet sein, daß er - wie auch in Fig. 4b angedeutet - den Temperaturfühler 11 zumindest teilweise umschließt bzw. daß Temperaturfühler 11 zumindest in den Koppelkörper 13 eingebettet ist.

Der Temperaturfühler 11 und der Koppelkörper 13 sind, wie auch aus Fig. 1a bzw. 1b ersichtlich, gemeinsam auf einer ersten Oberfläche 12+ des Trägerelements 12 angeordnet. Eine der Oberfläche 12+ gegenüberliegende, beispielsweise dazu zumindest bereichsweise planparallele, zweite Oberfläche 12# des Trägerelments 12 ist zudem dafür vorgesehen, das vorbezeichnete Rohr 2 zumindest bereichsweise zu kontaktieren. Der Koppelkörper 13 ist unter Bildung einer Koppelkörper-zu-Trägerelement-Verbindungszone auch mit dem Trägerelement 12, insb. nämlich mit dessen Mittelsegment 12a, stoffschlüssig verbunden. Nach einer weiteren Ausgestaltung der Erfindung ist ferner vorgesehen, daß die Oberfläche 12+ des Trägerelements 12 zumindest im Bereich der Koppelkörper-zu-Trägerelement-Verbindungszone plan ist und/oder daß die Oberfläche 12# des Trägerelements 12 zumindest im Bereich der Koppelkörper-zu-Trägerelement-Verbindungszone plan ist, beispielsweis derart, daß die Oberflächen 12+, 12# des Trägerelements 12 zumindest im Bereich der Koppelkörper-zu-Trägerelement-Verbindungszone planparallel sind.

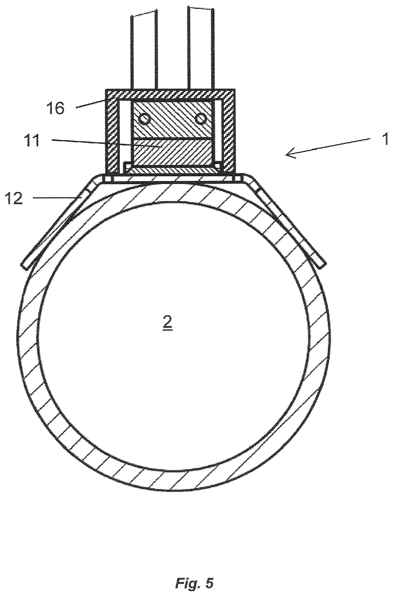

Nach einer weiteren Ausgestaltung der Erfindung umfaßt die Sensorbaugruppe, wie auch in Fig. 1a und 1b angedeutet bzw. aus deren Zusammenschau ersichtlich, ein mit dem Temperaturfühler 11 elektrisch verbundenes, beispielsweise mittels Kupfer-Drähten und/oder Silber-Drähten gebildetes, Paar Anschlußdrähte 14; die im besondern in der Weise, die dadurch gebildeten Verbindungsstellen der Anschlußdrähte 14 mit der Leiterbahn 112 jeweils auf dem vorbezeichneten Träger 111 angeordnet sind. Nämliche Anschlußdrähte 14 können beispielsweise vor dem erwähnten Zusammenfügen von Trägerelement 12 und Temperaturfühler 11 mit dessen Leiterbahn 112 stoffschlüssig verbunden werden, ggf. auch bereits während der Herstellung des Temperaturfühlers 11. Zur weiteren Verbesserung der mechanischen Stabilität, nicht zuletzt auch einer Vibrationsfestigkeit der Sensorbaugruppe umfaßt diese nach einer weiteren Ausgestaltung der Erfindung desweiteren eine sowohl den Temperaturfühler 11 als auch das vorbezeichnete Paar Anschlußdrähte 14 jeweils zumindest teilweise bedeckende Schutzschicht 15. Die Schutzschicht 15 kann beispielsweise stoffschlüssig mit dem Temperaturfühler 11 und/oder den Anschlußdrähte 14 verbunden sein bzw. zumindest anteilig aus einem Kunststoff bestehen, etwa einem Silikon und/oder einem Epoxidharz. Zudem kann die Schutzschicht 15 so ausgebildet und positioniert sein, daß dadurch der Temperaturfühler 11 und das Paar Anschlußdrähte 14 innerhalb eines gemeinsamen, beispielsweise die vorbezeichneten Verbindungsstellen der Anschlußdrähte 14 mit der Leiterbahn 112 einschließenden Kontaktbereichs bedeckt sind. Alternativ oder in Ergänzung zur vorbezeichneten Schutzschicht 15 kann die Sensorbaugruppe zur Verbesserung von deren mechanischer Stabilität desweiteren eine stoffschlüssig mit dem Trägerelement 12 verbundene, gleichwohl den Temperaturfühler 11 umspannende, beispielsweise nämlich den Temperaturfühler gegen das Trägerelement gedrückt haltende, Halteklammer 16 vorgesehen sein. Die Halteklammer 16 kann beispielsweise aus einem Metall und/oder demselben Material wie das Trägerelement 12 hergestellt und, wie auch in Fig. 5 schematisch dargestellt, am Mittelsegment 12a des Trägerelements 12 fixiert sein, beispielsweise nachdem der Temperaturfühler 11 darauf angebracht worden ist.

Wie bereits erwähnt, ist die erfindungsgemäße Sensorbaugruppe 1 dafür vorgesehen, als Bestandteil einer dem Messen wenigstens einer Meßgröße dienlichen Wandlervorrichtung verwendet zu werden, wobei die Wandlervorrichtung als ein weiteren Bestandteil ein Führen des Fluids dienliches Rohr 2 umfaßt. Nämliches Rohr 2 weist ein von einer, beispielsweise metallischen, Wandung 21 umhülltes Lumen 22 auf und ist, wie auch in Fig. 3a gezeigt, zumindest bereichsweise hohlzylindrisch ausgebildet. Das Rohr kann dafür eingerichtet sein, im vorbezeichnetem Lumen das zu messende, beispielsweise nämlich über eine daran angeschlossene Rohrleitung zu- bzw. wiederabgeleitetes, Fluid zu führen. Die Wandung 22 des Rohrs 2 kann vorteilhaft zumindest anteilig, beispielsweise nämlich auch überwiegend oder vollständig, aus einem Edelstahl, z.B. einem austenitischen rostfreien Stahl, bestehen. Nach einer weiteren Ausgestaltung der Erfindung ist das Rohr 2 ferner dafür eingerichtet, das strömende Fluid im Lumen 22 zu führen und währenddessen vibrieren gelassen zu werden.

Bei der erfindungsgemäßen Wandlervorrichtung ist das Trägerelement 12 der Sensorbaugruppe 1 - wie auch in Fig. 3a bzw. 3b dargestellt bzw. aus deren Zusammenschau ohne weiteres ersichtlich - auf einer dem Lumen abgewandten Oberfläche 21+ der Wandung 21 des Rohrs 2 angeordnet, insb. nämlich derart, daß das Trägerelement 12 der Sensorbaugruppe 1 die Wandung 22 des Rohrs 2 - wie auch in Fig. 3a bzw. 3b dargestellt bzw. aus einer Zusammenschau der Fig. 1a, 1b, 3a und 3b ohne weiteres ersichtlich - mit der der Oberfläche 12+ des Trägerelements 12 gegenüberliegenden zweiten Oberfläche 12# zumindest bereichsweise kontaktiert. Das Trägerelement 12 bzw. die damit gebildete Sensorbaugruppe 1 ist - wie auch in Fig. 3a angedeutet - auf einem hohlzylindrischen, mithin geraden Segment der Wandung 22 positioniert. Zudem ist das Trägerelement 12 - wie auch in Fig. 3a angedeutet - zumindest in ausgewählten Bereichen 100 stoffschlüssig mit der Wandung 21 des Rohrs 2 verbunden, beispielsweise nämlich mit der Wandung 21 verschweißt und/oder verlötet. Trägerelement 12 und die Wandung 21 können vorteilhaft zudem zumindest anteilig, beispielsweise nämlich auch überwiegend oder vollständig, aus dem gleichen Material, beispielsweise nämlich dem gleichem Edelstahl, bestehen.

Nach einer weiteren Ausgestaltung der Erfindung ist das Trägerelement 12 so ausgebildet und so auf dem Rohrs 2 angeordnet, daß das Mittelsegment 12a und/oder das Endsegment 12b und/oder das Endsegment 12c des Trägerelements die Wandung 22 des Rohrs kontaktieren; dies im besonderen in der Weise, daß das Mittelsegment die Wandung im Bereich der vorbezeichneten Koppelkörper-zu-Trägerelement-Verbindungszone bzw. unter Bildung einer Mittelsegment-zu-Rohr-Kontaktzone kontaktiert. Hierbei kann das Trägerelement 12 der auf das Rohr 2 aufgesetzten Sensorbaugruppe 1 - wie auch in Fig. 3a bzw. 3b dargestellt bzw. aus deren Zusammenschau ohne weiteres ersichtlich - eine von der in Fig. 1a, 1b und 2 gezeigten, beispielsweise nämlich einem Auslieferungszustand entsprechenden, Ausgangsform abweichenden Einbauform aufweisen, beispielsweise nämlich klammerartig geformt sein; dies insb. derart, daß die Oberfläche 12+ des Trägerelements innerhalb eines sich von dessen Endsegment 12b bis zu dessen Endsegment 12c erstreckenden Bereich konvex ist und/oder daß die Oberfläche 12# des Trägerelements 12 innerhalb eines sich von dessen Endsegment 12b bis zu dessen Endsegment 12c erstreckenden Bereich konkav ist. Wie Fig. 3b bzw. aus einer Zusammenschau der Fig. 3a bzw. 3b ersichtlich, kann das Trägerelement 12 dabei so geformt sein, daß sowohl das Endsegment 12b und das Mittelsegment 12a des Trägerelements als auch das Endsegment 12c und das Mittelsegment 12a des Trägerelements jeweils einen, insb. gleichgroßen, Winkel von weniger als 180° und von mehr als 90° einschließen. Alternativ oder in Ergänzung ist ferner vorgesehen, daß das Mittelsegement 12a des Trägerelements die Wandung des Rohrs - wie auch in Fig. 3b angedeutet - lediglich tangential kontaktiert und/oder daß das Endsegment 12b und/oder das Endsegment 12c die Wandung 22 flächig kontaktieren.

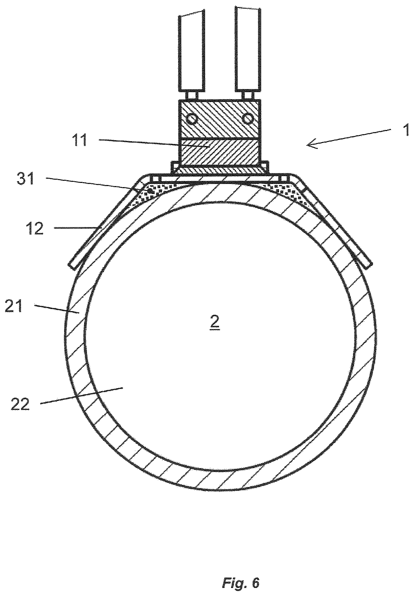

Nach einer weiteren Ausgestaltung der Erfindung sind - wie auch in Fig. 3a angedeutet - zudem das Endsegment 12b des Trägerelements 12 und die Wandung 21 des Rohrs 2, beispielsweise nämlich mittels Widerstands- bzw. Punktschweißens miteinander verschweißt und/oder sind das Endsegment 12c des Trägerelements 12 und die Wandung 21 des Rohrs 2, insb. nämlich mittels Widerstands- bzw. Punktschweißens, miteinander verschweißt; dies im besonderen in der Weise, daß das Mittelsegement 12a des Trägerelements 12 nicht stoffschlüssig mit der Wandung des Rohrs verbunden ist bzw. daß lediglich die beiden vorbezeichneten Endsegmente 12b, 12c des Trägerelements 12 stoffschlüssig mit der Wandung 21 des Rohrs 2 verbunden sind. Nicht zuletzt für diesen Fall kann zur Verbesserung der thermischen Kopplung im Bereich der Mittelsegment-zu-Rohr-Kontaktzone zumindest zwischen dem Mittelsegement des Trägerelements und der Wandung des Rohrs eine Wärmeleitpaste appliziert. Alternativ können das Mittelsegment 12a und die Wandung 21, wie auch in Fig. 6 angedeutet, auch stoffschlüssig miteinander verbunden sein, beispielsweise mittels einer Lötverbindung oder mittels eines Wärmeleitklebers 3.

Die erfindungsgemäße Wandlervorrichtung kann sehr einfach beispielsweise dadurch hergestellt werden, indem die bereitgestellte Sensorbaugruppe auf dem bereitgestellten Rohr 2 positioniert wird, derart, daß zunächst das Endsegment 12b an die Wandung 21 des Rohrs 2 angelegt und ebenda stoffschlüssig mit der Wandung 2, beispielsweise nämlich mittels Widerstandschweißens, verbunden wird und indem hernach auch das - zunächst noch freie - Endsegment 12c entsprechend an die Wandung 21 des Rohrs 2 - insb. nämlich straff bzw. unter Bildung der vorbezeichneten Mittelsegment-zu-Rohr-Kontaktzone - angelegt und ebenda gleichermaßen stoffschlüssig mit der Wandung 2, beispielsweise nämlich ebenfalls mittels Widerstandsschweißens, verbunden wird. Vorteilhaft kann dabei auch eine Sensorbaugruppe 1 mit einem zunächst in ursprünglicher, beispielsweise nämlich einer in Fig. 1a, 1b bzw. 2 gezeigten Form entsprechenden, Ausgangsform belassenem Trägerelement 12 verwendet werden, wobei die in Fig. 3a bzw. 3b finale Einbauform praktisch erst während des Verbindens von Sensorbaugruppe 1 und Rohr 2 herbeigeführt wird.

Um auch bei in Serienfertigung manuell durchgeführter Endmontage der Sensorbaugruppe auf dem Rohr regelmäßig eine möglichst definierte Kontaktgabe zwischen Rohr und Sensorbaugruppe, nicht zuletzt auch innerhalb der vorbezeichneten Mittelsegment-zu-Rohr-Kontaktzone, gewährleisten, gleichwohl eine möglichst einfache Handhabung der Sensorbaugruppe ermöglichen zu können ist bei der erfindungsgemäßen Sensorbaugruppe bzw. der damit gebildeten Wandlervorrichtung das Trägerelement 12 so ausgebildet, daß eine kleinste Biegesteifigkeit EI₁₂ₐ, die dessen Mittelsegment 12a im Bereich der vorbezeichneten Koppelkörper-zu-Trägerelement-Verbindungszone mindestens aufweist, größer ist als eine kleinste Biegesteifigkeit EI₁₂, die das Trägerelement 12 insgesamt aufweist, bzw. daß nämliche kleinste Biegesteifigkeit EI₁₂, des Mittelsegments 12a größer ist als eine kleinste Biegesteifigkeit EI_{12b}, die das Endsegment 12b aufweist, und/oder als eine kleinste Biegesteifigkeit EI_{12c}, die das Endsegment 12c aufweist. Dadurch kann auf sehr einfache, gleichwohl effektive Weise sichergestellt werden, daß zum einen das Trägerelement 12 auch manuell während der Endmontage der Sensorbaugruppe 1 am Rohr 2 von deren Ausgangsform in die vorbezeichnete finale Einbauform überführt werden kann, und daß zum anderen die für die Langzeitstabilität der Sensorbaugruppe bzw. der damit gebildeten Wandlervorrichtung besonders kritische Koppelkörper-zu-Trägerelement-Verbindungszone frei von überhöhten, nämlich die Sensorbaugruppe 1 schädigenden mechanischen Spannungen gehalten wird. Nach einer weiteren Ausgestaltung der Erfindung ist das Endsegment 12b und/oder das Endsegment 12c eingerichtet, infolge einer darin jeweils im Abstand zum Mittelsegment 12a eingeleiteten Biegekraft plastisch verformt, insb. nämlich gebogen, zu werden bzw. ist das Mittelsegment 12a eingerichtet, infolge einer in das Endsegment 12b und/oder einer in das Endsegment 12c jeweils eingeleiteten, nämliches Endsegment 12b bzw. 12c jeweils plastisch verformenden Biegekraft nicht plastisch verformt zu werden. Die erfindungsgemäßen Relationen der vorbezeichneten Biegesteifigkeiten EI₁₂, EI₁₂ₐ, EI_{12b}, EI₁₂, können - wie auch in Fig. 2 schematisch dargestellt - auf sehr einfache Weise durch am Trägerelement gezielte vorgenommene Materialschwächungen 12' 12", beispielsweise in Form von in das Trägerelement entsprechend eingebrachten Aussparungen, Bohrungen und/oder Langlöchern, hergestellt werden.

## Patentansprüche

1. Wandlervorrichtung, umfassend:
- ein ein von einer, insb. metallischen, Wandung (21) umhülltes Lumen (22) aufweisendes Rohr (2)
- sowie eine Sensorbaugruppe (1),
welche Sensorbaugruppe umfasst:
- einen, insb. in Dünnschichttechnik hergestellten bzw. mittels wenigstens eines Platin-Meßwiderstands gebildeten, Temperaturfühler (11);
- ein, insb. monolithisches und/oder klammerartig geformtes, metallisches Trägerelement (2) zum Haltern des Temperaturfühlers
-- mit einem, insb. plattenförmigen, Mittelsegment (12a),
-- mit einem an ein erstes Ende des Mittelsegments anschließenden plattenförmigen ersten Endsegment (12b)
-- und mit einem an ein, vom ersten Ende entferntes, zweites Ende des Mittelsegments anschließenden plattenförmigen zweiten Endsegment (12c);
- sowie einen den Temperaturfühler thermisch leitend mit dem Trägerelement koppelnden, insb. den Temperaturfühler zumindest teilweise umschließenden und/oder metallischen, Koppelkörper (13);
wobei der Temperaturfühler (11) und der Koppelkörper (13) stoffschlüssig miteinander verbunden und gemeinsam auf einer ersten Oberfläche (12+) des Trägerelements (12) angeordnet sind,
- und wobei der Koppelkörper (13) mit dem Trägerelement (12), insb. nämlich mit dessen Mittelsegment (12a), unter Bildung einer Koppelkörper-zu-Trägerelement-Verbindungszone stoffschlüssig verbunden ist;
- wobei das Trägerelement (12) der Sensorbaugruppe (1) auf der dem Lumen abgewandten Oberfläche (21+) der Wandung (21) des Rohrs angeordnet und stoffschlüssig mit nämlicher Wandung (21) verbunden, insb. nämlich damit verschweißt und/oder verlötet, ist,
-- wobei das Trägerelement (12) auf einem hohlzylindrischen Segment der Wandung (21) angeordnet ist,
-- und wobei das Trägerelement (12) die Wandung (21) des Rohrs mit einer der ersten Oberfläche (12+) des Trägerelements gegenüberliegenden, insb. planen, zweiten Oberfläche (12#) zumindest bereichsweise kontaktiert;
- und wobei eine kleinste Biegesteifigkeit EI₁₂ₐ, die das Mittelsegment (12a) im Bereich der Koppelkörper-zu-Trägerelement-Verbindungszone mindestens aufweist, größer als eine kleinste Biegesteifigkeit EI₁₂, die das Trägerelement (12) insgesamt aufweist, und/oder größer als eine kleinste Biegesteifigkeit EI_{12b}, die das erste Endsegment (12b) aufweist, und/oder größer als eine kleinste Biegesteifigkeit EI_{12c}, die das zweite Endsegment (12c) aufweist, ist.

2. Wandlervorrichtung gemäß einem der vorherigen Ansprüche,
- wobei das erste Endsegment (12b) eingerichtet ist, infolge einer darin im Abstand zum Mittelsegment (12a) eingeleiteten Biegekraft plastisch verformt, insb. gebogen, zu werden; und/oder
- wobei das zweite Endsegment (12c) eingerichtet ist, infolge einer darin im Abstand zum Mittelsegment (12a) eingeleiteten Biegekraft plastisch verformt, insb. gebogen, zu werden; und/oder
- wobei das Mittelsegment (12a) eingerichtet ist, infolge einer in das erste Endsegment (12b) eingeleiteten, nämliches Endsegment (12b) plastisch verformenden Biegekraft und/oder einer in das zweite Endsegment (12c) eingeleiteten, nämliches Endsegment (12c) plastisch verformenden Biegekraft nicht plastisch verformt zu werden; und/oder
- wobei das erste Endsegment (12b) und das zweite Endsegment (12c) eingerichtet sind, infolge einer darin jeweils im Abstand zum Mittelsegment (12a) eingeleiteten Biegekraft, insb. plastisch, verformt, insb. gebogen, zu werden, insb. derart daß sowohl das erste Endsegment (12b) und das Mittelsegment (12a) als auch das zweite Endsegment (12c) und das Mittelsegment (12a) jeweils einen, insb. gleichgroßen, Winkel von weniger als 180° und von mehr als 90° einschließen und/oder daß die erste Oberfläche innerhalb eines sich vom ersten Endsegment bis zum zweiten Endsegment erstreckenden Bereich konvex ist; und/oder
- wobei das Trägerelement zumindest anteilig, insb. nämlich überwiegend oder vollständig, aus einem Edelstahl, insb. nämlich einem austenitischen rostfreien Stahl, besteht.

3. Wandlervorrichtung gemäß einem der vorherigen Ansprüche, wobei der Temperaturfühler (11) einen Träger (111), insb. aus einem Glas und/oder einer Keramik, sowie wenigstens eine auf nämlichem Träger (111) angeordnete, insb. nämlich in Dünnschichttechnik applizierte und/oder zumindest abschnittsweise mäanderförmige, Leiterbahn (112), insb. aus Platin, aufweist.

4. Wandlervorrichtung gemäß dem vorherigen Anspruch,
- wobei der Temperaturfühler (11) eine zumindest die Leiterbahn (112) zumindest teilweise bedeckende, insb. zumindest anteilig aus einem bleifreien und/oder der EU-Richtlinie 2011/65/EU (ROHS 2) konformen Glas bestehende, Schutzschicht (113) aufweist; und/oder
- wobei der Temperaturfühler auf einer die wenigstens eine Leiterbahn nicht tragenden, insb. nämlich der Leiterbahn gegenüberliegenden, Seite des Trägers (11) eine, insb. nämlich in Dünnschichttechnik applizierte, Metallisierungsschicht aufweist.

5. Wandlervorrichtung gemäß einem der vorherigen Ansprüche, weiters umfassend: ein mit dem Temperaturfühler elektrisch verbundenes, insb. mittels Kupfer-Drähten und/oder Silber-Drähten gebildetes, Paar Anschlußdrähte (14).

6. Wandlervorrichtung gemäß dem vorherigen Anspruch, weiters umfassend: eine sowohl den Temperaturfühler (11) als auch das Paar Anschlußdrähte (14), insb. innerhalb eines gemeinsamen Kontaktbereichs, jeweils zumindest teilweise bedeckende, insb. zumindest anteilig aus einem Kunststoff bestehende, Schutzschicht (15), insb. aus einem Silikon und/oder einem Epoxidharz.

7. Wandlervorrichtung gemäß einem der vorherigen Ansprüche, weiters umfassend: eine stoffschlüssig mit dem Trägerelement, insb. mit dessen Mittelsegement, verbundene, gleichwohl den Temperaturfühler umspannende, insb. nämlich den Temperaturfühler gegen das Trägerelement gedrückt haltende, Halteklammer (16), insb. aus einem Metall.

8. Wandlervorrichtung gemäß einem der vorherigen Ansprüche,
- wobei der Temperaturfühler (11) dafür eingerichtet ist, eine Temperatur an einer damit gebildeten Temperaturmeßstelle zu erfassen und in ein Temperaturmeßsignal (θ1), nämlich ein die Meßstellentemperatur (ϑ1) repräsentierendes elektrisches Meßsignal, insb. mit einer von nämlicher ersten Meßstellentemperatur abhängigen elektrische Signalspannung und/oder einem von nämlicher ersten Meßstellentemperatur abhängigen elektrischen Signalstrom, zu wandeln; und/oder
- wobei der Temperaturfühler (11) mittels eines Platin-Meßwiderstandes gebildet ist; und/oder
- wobei der Temperaturfühler mittels eines Thermistors gebildet ist; und/oder
- wobei der Temperaturfühler mittels eines Thermoelements gebildet ist.

9. Wandlervorrichtung gemäß einem der vorherigen Ansprüche,
- wobei das Rohr dafür eingerichtet ist, in seinem Lumen ein jeweils zumindest zeitweise strömendes Fluid, beispielsweise nämlich ein Gas, eine Flüssigkeit oder eine fließfähige Dispersion, zu führen; und/oder
- wobei das Rohr dafür eingerichtet ist, in seinem Lumen ein jeweils zumindest zeitweise strömendes Fluid, beispielsweise nämlich ein Gas, eine Flüssigkeit oder eine fließfähige Dispersion, zu führen und währenddessen vibrieren gelassen zu werden; und/oder
- wobei die zweite Oberfläche (12#) des Trägerelements innerhalb eines sich von dessen ersten Endsegment (12b) bis zu dessen zweiten Endsegment (12c) erstreckenden Bereich konkav ist; und/oder
- wobei sowohl das erste Endsegment (12b) und das Mittelsegment (12a) des Trägerelements als auch das zweite Endsegment (12c) und das Mittelsegment (12a) des Trägerelements jeweils einen, insb. gleichgroßen, Winkel von weniger als 180° und von mehr als 90° einschließen; und/oder
- wobei die erste Oberfläche (12+) des Trägerelements innerhalb eines sich von dessen ersten Endsegment (12b) bis zu dessen zweiten Endsegment (12c) erstreckenden Bereich konvex ist.

10. Wandlervorrichtung gemäß einem der vorherigen Ansprüche,
- wobei das Trägerelement, insb. nämlich dessen Mittelsegment und/oder dessen erstes Endsegment und/oder dessen zweites Endsegment, die Wandung des Rohrs kontaktiert; und/oder
- wobei die Wandung des Rohrs zumindest anteilig, insb. nämlich überwiegend oder vollständig, aus einem Edelstahl, insb. nämlich einem austenitischen rostfreien Stahl, besteht; und/oder
- wobei das Trägerelement und die Wandung des Rohrs zumindest anteilig, insb. nämlich überwiegend oder vollständig, aus gleichem Material bestehen; und/oder
- wobei das erste Endsegment des Trägerelements und die Wandung des Rohrs, insb. nämlich mittels Widerstandsschweißen, miteinander verschweißt sind; und/oder
- wobei das zweite Endsegment des Trägerelements und die Wandung des Rohrs, insb. nämlich mittels Widerstandsschweißen, miteinander verschweißt sind; und/oder
- wobei das Trägerelement klammerartig ausgebildet ist; und/oder
- wobei die erste Oberfläche des Trägerelments zumindest im Bereich der Koppelkörper-zu-Trägerelement-Verbindungszone plan ist; und/oder
- wobei das Mittelsegment des Trägerelements die Wandung des Rohrs im Bereich der Koppelkörper-zu-Trägerelement-Verbindungszone kontaktiert; und/oder
- wobei das Mittelsegment des Trägerelements die Wandung des Rohrs lediglich tangential kontaktiert.

11. Wandlervorrichtung gemäß einem der vorherigen Ansprüche,
- wobei das Mittelsegment des Trägerelements die Wandung des Rohrs unter Bildung einer Mittelsegment-zu-Rohr-Kontaktzone kontaktiert; und/oder
- wobei zumindest zwischen dem Mittelsegment des Trägerelements und der Wandung des Rohrs eine Wärmeleitpaste und/oder ein Wärmeleitkleber appliziert ist; und/oder
- wobei das Mittelsegment des Trägerelements und die Wandung des Rohrs miteinander verlötet sind; und/oder
- wobei lediglich die ersten und zweiten Endsegmente des Trägerelements, nicht aber dessen Mittelsegement stoffschlüssig mit der Wandung des Rohrs verbunden sind; und/oder
- wobei das Mittelsegement des Trägerelements nicht stoffschlüssig mit der Wandung des Rohrs verbunden ist.

12. Meßsystem zum Messen wenigstens einer Meßgröße, insb. einer Temperatur, einer Dichte und/oder einer Viskosität, eines strömenden Fluids, insb. eines Gases, einer Flüssigkeit oder einer fließfähigen Dispersion, welches Meßsystem umfaßt:
- zum Führen des Fluids eine Wandlervorrichtung gemäß einem der vorherigen Ansprüche;
- sowie eine mit dem Temperaturfühler elektrisch verbundene, insb. mittels eines Mikroprozessors gebildete, Meß- und Betriebs-Elektronik (ME).

13. Verfahren zum Herstellen einer Wandlervorrichtung gemäß einem der vorherigen Ansprüche, umfassend:
- Bereitstellen der Sensorbaugruppe;
- Bereitstellen des Rohrs;
- Anlegen des ersten Endsegments des Trägerelements an die Wandung des Rohrs
- stoffschlüssiges Verbinden des ersten Endsegments des Trägerelements mit der Wandung des Rohrs, insb. nämlich mittels Widerstandsschweißens;
- Anlegen des zweiten Endsegments des Trägerelements an die Wandung des Rohrs;
- sowie stoffschlüssiges Verbinden des zweiten Endsegments des Trägerelements mit der Wandung des Rohrs, insb. nämlich mittels Widerstandsschweißens.

## Claims

1. Transducer apparatus, comprising:
- a tube (2) having a lumen (22) surrounded by a wall (21), in particular a metallic wall (22),
- and a sensor assembly (1), which
sensor assembly comprises:
- a temperature sensor (11), particular temperature sensor manufactured in particular using thin-film technology or formed by means of at least one platinum measuring resistor;
- a metallic carrier element (2), in particular monolithic and/or clamp like shaped metallic carrier element (2), for holding the temperature sensor
-- with a, in particular plate-shaped, central segment (12a),
-- with a plate-shaped first end segment (12b) adjoining a first end of the middle segment
-- and with a plate-shaped second end segment (12c) adjoining a second end of the center segment remote from the first end;
- and a, in particular at least partially enclosing and/or metallic, coupling body (13), thermally conductive coupling the temperature sensor and the carrier element;
wherein the temperature sensor (11) and the coupling body (13) are connected to one another by a material bond and are arranged together on a first surface (12+) of the carrier element (12),
- and wherein the coupling body (13) is connected to the carrier element (12), in particular to its central segment (12a), forming a coupling body-to-support connection zone;
- wherein the carrier element (12) of the sensor assembly (1) is arranged on the surface (21+) of the wall (21) of the tube facing away from the lumen and is connected to the said wall (21) by a material bond, in particular by being welded and/or soldered thereto,
-- wherein the carrier element (12) is arranged on a hollow cylindrical segment of the wall (21),
-- and wherein the carrier element (12) contacts the wall (21) of the tube with a, in particular planar, second surface (12#) opposite the first surface (12+) of the carrier element at least in certain areas;
and wherein a smallest bending stiffness EI12ad, which the centre segment (12a) has in the region of the coupling body-to-support element connection zone at least, is greater than a smallest bending stiffness EI12, which the support element (12) has overall, and/or is greater than a smallest bending stiffness EI12bd, which the first end segment (12b) has, and/or is greater than a smallest bending stiffness EI12cd, which the second end segment (12c) has.

2. Transducer apparatus according to any of the preceding claims,
- wherein the first end segment (12b) is arranged to be plastically deformed, in particular bent, as a result of a bending force introduced therein at a distance from the middle segment (12a); and/or
- wherein the second end segment (12c) is arranged to be plastically deformed, in particular bent, as a result of a bending force introduced therein at a distance from the central segment (12a); and/or
- wherein the middle segment (12a) is set up to move into the first end segment (12b) as a result of a injected bending force plastically deforming said end segment (12b) and/or a bending force plastically deforming said end segment (12c) introduced into the second end segment (12c); and/or
- wherein the first end segment (12b) and the second end segment (12c) are arranged to be deformed, in particular plastically, as a result of a bending force introduced therein at a distance from the center segment (12a),
in particular bent, in particular such that both the first end segment (12b) and the middle segment (12a) and the second end segment (12c) and the middle segment (12a) each enclose a V angle, in particular of the same size, of less than 180° and of more than 90° and/or such that the first surface is convex within an area extending from the first end segment to the second end segment; and/or
- wherein the carrier element consists at least in part, in particular predominantly or completely, of a stainless steel, in particular an austenitic stainless steel.

3. Transducer apparatus according to one of the preceding claims, wherein the temperature sensor (11) has a carrier (111), in particular made of a glass and/or a ceramic, and at least one conductor track (112), in particular made of platinum, arranged on the carrier (111), in particular applied using thin-film technology and/or meandering at least in sections.

4. Transducer apparatus according to the preceding claim,
- wherein the temperature sensor (11) has a protective layer (113) at least partially covering at least the conductor track (112), in particular consisting at least in part of a lead-free glass and/or glass conforming to EU Directive 2011/65/EU (ROHS 2); and/or
- wherein the temperature sensor has a metallization layer, in particular applied using thin-film technology, on a side of the carrier (11) which does not support the at least one conductor track, in particular opposite the conductor track.

5. A transducer device according to any one of the preceding claims, further comprising: a transducer connected to the Temperature sensor electrically connected pair of connecting wires (14) formed in particular by means of copper wires and/or silver wires.

6. A transducer device according to the preceding claim, further comprising: a connection wire (14) connecting both the temperature sensor (11) and the pair of connection wires (14), in particular within a common contact area, in each case at least partially covering, in particular at least partially consisting of a plastic, protective layer (15), in particular consisting of a silicone and/or an epoxy resin.

7. Transducer apparatus according to one of the preceding claims, further comprising: a temperature sensor which is connected to the carrier element, in particular to the central element thereof, in a materially bonded manner, but which nevertheless has the temperature sensor holding clamp (16), in particular of a metal, which holds the temperature sensor pressed against the carrier element.

8. Transducer apparatus according to any of the preceding claims,
- wherein the temperature sensor (11) is set up to detect a temperature at a temperature measuring point formed therewith and to convert it into a temperature measuring signal (θ1), namely an electrical measuring signal representing the measuring point temperature (ϑ1), in particular with an electrical signal of the same temperature measuring point.
an electrical signal voltage dependent on the first measuring point temperature and/or an electrical signal current dependent on the same first measuring point temperature; and/or
- wherein the temperature sensor (11) is formed by means of a platinum measuring resistor; and/or
- wherein the temperature sensor is formed by means of a thermistor; and/or
- whereby the temperature sensor is formed by means of a thermocouple.

9. Transducer apparatus according to any of the preceding claims,
- wherein the tube is adapted to carry a fluid, for example a gas, a liquid or a flowable dispersion, flowing at least intermittently in its lumen; and/or
- wherein the tube is adapted to carry in its lumen a fluid, for example a gas, a liquid or a flowable dispersion, flowing at least intermittently, while being vibrated; and/or
- wherein the second surface (12#) of the carrier element is concave within a region extending from its first end segment (12b) to its second end segment (12c); and/or
- wherein both the first end segment (12b) and the middle segment (12a) of the carrier element as well as the second end segment (12c) and the middle segment (12a) of the carrier element each enclose an angle, in particular of the same size, of less than 180° and of more than 90°; and/or
- wherein the first surface (12+) of the carrier element is convex within a region extending from its first end segment (12b) to its second end segment (12c).

10. Transducer apparatus according to any of the preceding claims,
- wherein the carrier element, in particular its middle segment and/or its first end segment and/or its second end segment, contacts the wall of the tube; and/or
- whereby the wall of the tube consists at least in part, in particular predominantly or completely, of consists of a stainless steel, in particular an austenitic stainless steel; and/or
- wherein the support element and the wall of the tube consist at least in part, in particular predominantly or completely, of the same material; and/or
- wherein the first end segment of the support element and the wall of the tube are welded together, in particular by means of resistance welding; and/or
- wherein the second end segment of the support element and the wall of the tube are welded together, in particular by means of resistance welding; and/or
- wherein the carrier element is of a clamp-like design; and/or
- wherein the first surface of the carrier element is flat at least in the area of the coupling body-to-carrier element connection zone; and/or
- wherein the center segment of the support element contacts the wall of the tube in the area of the coupling body-to-support element connection zone; and/or
- whereby the center segment of the support element only makes tangential contact with the wall of the tube.

11. Transducer apparatus according to any of the preceding claims,
- wherein the center segment of the support member contacts the wall of the tube to form a center-segment-to-tube contact zone; and/or
- wherein a thermally conductive paste and/or a thermally conductive adhesive is applied at least between the central segment of the carrier element and the wall of the tube; and/or
- whereby the center segment of the support element and the wall of the tube are soldered together; and/or
- wherein only the first and second end segments of the support element, but not its middle segment, are connected to the wall of the tube by a material bond; and/or
- whereby the middle segment of the support element is not connected to the wall of the tube by a material bond.

12. Measuring system for measuring at least one measurand, in particular a temperature, a density and/or a viscosity, of a flowing fluid, in particular a gas, a liquid or a flowable dispersion, which measuring system comprises:
- a transducer device according to one of the preceding claims for guiding the fluid;
- and an electronic measuring and operating unit (ME) electrically connected to the temperature sensor, in particular by means of a microprocessor.

13. A method of manufacturing a transducer device according to any one of the preceding claims, comprising:
- providing the sensor assembly;
- prepare the pipe;
- placing the first end segment of the support element against the wall of the pipe;
- material-locking connection of the first end segment of the support element to the wall of the pipe, in particular by means of resistance welding;
- placing the second end segment of the support element against the wall of the pipe;
- as well as material bonding of the second end segment of the support element to the wall of the tube, in particular by means of resistance welding.

## Revendications

1. Appareil de transduction, comprenant :
- un tube (2) comportant une lumière (22) entourée d'une paroi (21), en particulier d'une paroi métallique (22),
- et un ensemble de capteurs (1), cet
ensemble de capteurs comprenant
- un capteur de température (11), notamment un capteur de température fabriqué en particulier selon la technologie des couches minces ou formé au moyen d'au moins une résistance de mesure en platine ;
- un élément porteur métallique (2), en particulier un élément porteur métallique monolithique et/ou en forme de pince (2), destiné à recevoir le capteur de température
-- avec un segment central (12a), notamment en forme de plaque,
-- avec un premier segment d'extrémité en forme de plaque (12b) adjacent à une première extrémité du segment central
-- et avec un deuxième segment d'extrémité en forme de plaque (12c) attenant à une deuxième extrémité du segment central éloignée de la première extrémité ;
- et un corps de couplage (13), en particulier au moins partiellement enveloppant et/ou métallique, qui relie par conduction thermique le capteur de température et l'élément porteur ;
dans lequel le capteur de température (11) et le corps de couplage (13) sont reliés l'un à l'autre par une liaison matérielle et sont disposés ensemble sur une première surface (12+) de l'élément porteur (12),
- et dans lequel le corps de couplage (13) est relié à l'élément porteur (12), en particulier à son segment central (12a), formant une zone de connexion entre le corps de couplage et le support ;
- dans lequel l'élément porteur (12) de l'ensemble capteur (1) est disposé sur la surface (21+) de la paroi (21) du tube opposée à la lumière et est relié à ladite paroi (21) par une liaison matérielle, en particulier par soudure et/ou brasage,
-- dans lequel l'élément porteur (12) est disposé sur un segment cylindrique creux de la paroi (21),
-- et dans lequel l'élément porteur (12) entre en contact avec la paroi (21) du tube avec une deuxième surface (12#), en particulier plane, opposée à la première surface (12+) de l'élément porteur, au moins dans certaines zones ;
et dans lequel la plus petite rigidité de flexion EI12ad, que le segment central (12a) présente au moins dans la zone de connexion entre le corps de couplage et l'élément de support, est supérieure à la plus petite rigidité de flexion EI₁₂, que l'élément de support (12) présente dans son ensemble, et/ou est supérieure à la plus petite rigidité de flexion EI12bd, que le premier segment d'extrémité (12b) présente, et/ou est supérieure à la plus petite rigidité de flexion EI12cd, que le deuxième segment d'extrémité (12c) présente.

2. Appareil transducteur selon l'une des revendications précédentes,
- dans lequel le premier segment d'extrémité (12b) est conçu pour être déformé plastiquement, en particulier plié, sous l'effet d'une force de flexion introduite dans ce segment à une certaine distance du segment central (12a) ; et/ou
- dans lequel le second segment d'extrémité (12c) est conçu pour être déformé plastiquement, en particulier plié, sous l'effet d'une force de flexion introduite à une certaine distance du segment central (12a) ; et/ou
- dans lequel le segment central (12a) est configuré pour se déplacer dans le premier segment d'extrémité (12b) à la suite d'une
une force de flexion injectée déformant plastiquement ledit segment d'extrémité (12b) et/ou une force de flexion déformant plastiquement ledit segment d'extrémité (12c) introduite dans le second segment d'extrémité (12c) ; et/ou
- dans lequel le premier segment d'extrémité (12b) et le second segment d'extrémité (12c) sont conçus pour être déformés, en particulier plastiquement, sous l'effet d'une force de flexion introduite à une certaine distance du segment central (12a),
en particulier plié, en particulier tel que le premier segment d'extrémité (12b) et le segment central (12a) et le deuxième segment d'extrémité (12c) et le segment central (12a) forment chacun un angle V, en particulier de même taille, inférieur à 180° et supérieur à 90° et/ou tel que le segment d'extrémité (12c) et le segment central (12a) forment chacun un angle V de même taille.
la première surface est convexe dans une zone s'étendant du premier segment d'extrémité au second segment d'extrémité ; et/ou
dans lequel l'élément porteur est constitué au moins en partie, en particulier de façon prédominante ou complète, d'un acier inoxydable, en particulier d'un acier inoxydable austénitique.

3. Appareil transducteur selon l'une des revendications précédentes, dans lequel le capteur de température (11) comporte un support (111), notamment en verre et/ou en céramique, et au moins une piste conductrice (112), notamment en platine, disposée sur le support (111), notamment appliquée selon la technologie des couches minces et/ou serpentant au moins par sections.

4. Appareil transducteur selon la revendication précédente,
- dans lequel le capteur de température (11) comporte une couche protectrice (113) recouvrant au moins partiellement la piste conductrice (112), notamment constituée au moins en partie d'un verre sans plomb et/ou d'un verre conforme à la directive européenne 2011/65/UE (ROHS 2) ; et/ou
- dans lequel le capteur de température possède une couche de métallisation, notamment appliquée à l'aide de la technologie des couches minces, sur un côté du support (11) qui ne supporte pas la au moins une piste conductrice, notamment en face de la piste conductrice.

5. Dispositif transducteur selon l'une quelconque des revendications précédentes, comprenant en outre : un transducteur relié au capteur de température par une paire de fils de connexion (14) connectés électriquement, formés en particulier au moyen de fils de cuivre et/ou de fils d'argent.

6. Dispositif transducteur selon la revendication précédente, comprenant en outre : un fil de connexion (14) reliant à la fois le capteur de température (11) et la paire de fils de connexion (14), en particulier dans une zone de contact commune, dans chaque cas au moins partiellement recouvert, en particulier au moins partiellement constitué d'une couche protectrice en plastique (15), en particulier constituée d'une silicone et/ou d'une résine époxy.

7. Appareil transducteur selon l'une des revendications précédentes, comprenant en outre : un capteur de température qui est relié à l'élément porteur, en particulier à son élément central, par une liaison matérielle, mais qui comporte néanmoins le capteur de température
pince de maintien (16), en particulier en métal, qui maintient le capteur de température pressé contre l'élément porteur.

8. Appareil transducteur selon l'une des revendications précédentes,
- dans lequel le capteur de température (11) est conçu pour détecter une température à un point de mesure de la température formé avec lui et pour la convertir en un signal de mesure de la température (θ 1), à savoir un signal de mesure électrique représentant la température du point de mesure (ϑ 1), en particulier avec un signal électrique du même point de mesure de la température.
un signal électrique de tension dépendant de la température du premier point de mesure et/ou un signal électrique de courant dépendant de la même température du premier point de mesure ; et/ou
- dans lequel le capteur de température (11) est constitué d'une résistance de mesure en platine ; et/ou
- dans lequel le capteur de température est constitué d'une thermistance ; et/ou
- le capteur de température étant constitué d'un thermocouple.

9. Appareil transducteur selon l'une des revendications précédentes,
- dans lequel le tube est adapté pour transporter un fluide, par exemple un gaz, un liquide ou une dispersion fluide, circulant au moins de manière intermittente dans sa lumière ; et/ou
- dans lequel le tube est adapté pour transporter dans sa lumière un fluide, par exemple un gaz, un liquide ou une dispersion fluide, s'écoulant au moins de manière intermittente, tout en étantvibré ; et/ou
- dans lequel la deuxième surface (12#) de l'élément porteur est concave dans une région s'étendant de son premier segment d'extrémité (12b) à son deuxième segment d'extrémité (12c) ; et/ou
- dans lequel le premier segment d'extrémité (12b) et le segment central (12a) de l'élément porteur ainsi que le deuxième segment d'extrémité (12c) et le segment central (12a) de l'élément porteur forment chacun un angle, en particulier de même taille, inférieur à 180° et supérieur à 90° ; et/ou
- dans lequel la première surface (12+) de l'élément porteur est convexe dans une zone s'étendant de son premier segment d'extrémité (12b) à son second segment d'extrémité (12c).

10. Appareil transducteur selon l'une des revendications précédentes,
- dans lequel l'élément porteur, en particulier son segment central et/ou son premier segment d'extrémité et/ou son second segment d'extrémité, est en contact avec la paroi du tube ; et/ou
- la paroi du tube étant constituée au moins en partie, en particulier de façon prédominante ou complète, de est constituée d'un acier inoxydable, en particulier d'un acier inoxydable austénitique ; et/ou
- dans lequel l'élément de support et la paroi du tube sont constitués au moins en partie, en particulier de façon prédominante ou complète, du même matériau ; et/ou
- dans lequel le premier segment d'extrémité de l'élément de support et la paroi du tube sont soudés l'un à l'autre, notamment au moyen d'une soudure par résistance ; et/ou
- dans lequel le deuxième segment d'extrémité de l'élément de support et la paroi du tube sont soudés ensemble, en particulier au moyen d'une soudure par résistance ; et/ou
- dans lequel l'élément porteur a une forme de pince ; et/ou
- dans lequel la première surface de l'élément porteur est plate au moins
dans la zone de connexion entre le corps de couplage et l'élément
porteur ; et/ou
- dans lequel le segment central de l'élément de support entre en contact avec la paroi du tube dans la zone de connexion entre le corps de couplage et l'élément de
support ; et/ou
- le segment central de l'élément de support n'entrant en contact que de manière tangentielle avec la paroi du tube.

11. Appareil transducteur selon l'une des revendications précédentes,
- dans lequel le segment central de l'élément de support entre en contact avec la paroi du tube pour former une zone de contact entre le segment central et le tube ; et/ou
- dans lequel une pâte thermoconductrice et/ou un adhésif thermoconducteur est appliqué au moins entre le segment central de l'élément porteur et la paroi du tube ; et/ou
- le segment central de l'élément de support et la paroi du tube sont soudés l'un à l'autre ; et/ou
- dans lequel seuls les premier et deuxième segments d'extrémité de l'élément de support,
mais pas son segment central, sont reliés à la paroi du tube par une liaison matérielle ;
et/ou
- le segment central de l'élément de support n'est pas relié à la paroi du tube par une liaison matérielle.

12. Système de mesure pour mesurer au moins un mesurande, en particulier une température, une densité et/ou une viscosité, d'un fluide en écoulement, en particulier un gaz, un liquide ou une dispersion fluide, lequel système de mesure comprend :
- un dispositif transducteur selon l'une des revendications précédentes pour guider le fluide ;
- et une unité électronique de mesure et d'exploitation (ME) reliée électriquement au capteur de température, notamment au moyen d'un microprocesseur.

13. Procédé de fabrication d'un dispositif de transduction selon l'une quelconque des revendications précédentes, comprenant :
- fournir l'ensemble du capteur ;
- préparer le tuyau ;
- placer le premier segment d'extrémité de l'élément de support contre la paroi du tuyau ;
- liaison par verrouillage du matériau du premier segment d'extrémité de l'élément de support à la paroi du tuyau,
notamment par soudage par résistance ;
- placer le deuxième segment d'extrémité de l'élément de support contre la paroi du tuyau ;
- ainsi que le collage matériel du deuxième segment d'extrémité de l'élément de support à la paroi du tube, notamment par soudage par résistance.
